# EUROPÄISCHE PATENTSCHRIFT

(11) **EP 1 039 205 B1**
(45) Veröffentlichungstag und Bekanntmachung des Hinweises auf die Patenterteilung: **08.08.2007**
(21) Anmeldenummer: 00102294.6
(22) Anmeldetag: 17.02.2000
(51) Int. Cl.: F16L 27/111, F01N 7/18

(54) **Flexschlauch**
Flexible pipe
Conduite flexible

(30) Priorität: 25.03.1999 DE 19913562
(43) Veröffentlichungstag der Anmeldung: 27.09.2000
(73) Patentinhaber: Volkswagen Aktiengesellschaft, 38436 Wolfsburg (DE)
(72) Erfinder: Pape, Karl, Dipl.-Ing., 38442 Wolfsburg (DE)

(56) Entgegenhaltungen:
- EP-A- 0 436 772
- EP-A- 0 565 466
- EP-A- 0 797 039
- DE-A- 2 651 662

## Beschreibung

Die Erfindung betrifft einen Flexschlauch, insbesondere für eine Abgasleitung eines Verbrennungsmotors bei einem Kraftfahrzeug, mit einem Wellenbalg und einem innerhalb des Wellenbalges vorgesehenen Metallschlauch.

Als Flexschlauch wird ein flexibles Leitungselement für eine Abgasanlage eines Verbrennungsmotors bei einem Kraftfahrzeug bezeichnet, wobei derartige Flexschläuche in jüngster Zeit sehr weich ausgelegt sind, um eine sehr gute Schwingungsentkopplung zwischen dem Motor und der restlichen Abgasanlage zu erreichen. Folglich ist der Flexschlauch zwischen dem Motor und dem restlichen Abgasleitungssystem angeordnet. Bei einer derartigen Anordnung werden jedoch die Schwingungen, die im Betrieb des Motors entstehen, weiterhin auf zumindest einen Teil des Flexschlauches übertragen. Durch diese Schwingungen treten im Laufe der Betriebsdauer Geräusche und Beschädigungen am Flexschlauch auf, für deren Verhinderung im Stand der Technik bereits unterschiedliche Lösungen vorgeschlagen worden sind.

So ist im Stand der Technik ein Flexschlauch bekannt (DE-A-37 08 415), der den üblichen bekannten Aufbau aufweist, nämlich (radial von außen nach innen gesehen) eine Außenumflechtung, einen Wellenbalg, Isolierlagen und einen innen liegenden Metallschlauch. Weiterhin sind entsprechende Anschlußenden, d. h. Endstücke vorgesehen, die den Wellenbalg, die Außenumflechtung sowie den Metallschlauch entsprechend "fassen" bzw. halten. Die zwischen dem Metallschlauch und dem Wellenbalg vorgesehenen Isolierlagen sind zur Verhinderung von Schwingungen und zur entsprechenden Schallabsorption eingebracht. Diese Isolierlagen sind als elastische Zwischenlagen ausgebildet, dienen der Dämpfung und verhindern Klapper- bzw. Rasselgeräusche der Metallteile gegeneinander.

Weiterhin ist im Stand der Technik ein Flexschlauch bekannt (DE-A-40 34 055), bei dem zur Dämpfung von Schwingungen separate flexible Dämpfungsglieder am Außenumfang des Flexschlauches vorgesehen werden, die als federelastische Elemente ausgeführt sind und eine entsprechende Andruckkraft auf die Außenoberfläche des Flexschlauches ausüben. Der Außendurchmesser des innerhalb des Wellenbalges vorgesehenen Metallschlauches ist geringer als der Innendurchmesser des Wellenbalges, so daß hier ein entsprechender Abstand zwischen Wellenbalg und Metallschlauch im wesentlichen über die gesamte Länge des Wellenbalges vorgesehen ist. Einen ähnlichen Aufbau eines Flexschlauches zeigt auch der Stand der Technik gemäß der DE-A-39 24 697.

Die im Stand der Technik bekannten Flexschläuche sind nicht optimal ausgebildet. Einerseits kommt es während des Betriebs zu Wellenbalg-Resonanzschwingungen (Festigkeitsproblem, insbesondere bei weichen Wellenbälgen), wobei die Schwingungswege (Amplituden) hierbei durchaus so groß werden können, daß der Wellenbalg hierbei teilweise zerstört werden kann. Andererseits kommt es zu Kontakt-Rasselgeräuschen bzw. Klappergeräuschen (Akustikprobleme) zwischen Wellenbalg und Metallschlauch sowie im Metallschlauch selbst, die insbesondere dadurch hervorgerufen werden, daß der Metallschlauch zur guten Schwingungsentkopplung möglichst leichtgängig sein sollte. Weiterhin hat die Praxis gezeigt, daß insbesondere auch leichtgängige polygonförmig ausgebildete Metallschläuche während des Betriebs Ihre Form verändern können, d. h. leicht "durchhängen", so daß bei entsprechenden Schwingungen auch hierdurch Kontakt-Rasselgeräusche entstehen, wenn nämlich die entsprechenden Ecken der polygonförmigen Metallschläuche auf die Innenfläche des Wellenbalges prallen, obwohl zwischen Wellenbalg und Metallschlauch vzw. ein Abstand von ca. 1 mm vorgesehen wird. Aufgrund der Verformung des Metallschlauches während des Betriebs, zeigt sich bei den Ausführungsformen des Standes der Technik, wo keine Isolierlagen oder kein Drahtgestrick zwischen dem Wellenbalg und dem Metallschlauch vorgesehen sind, daß es hier zu Kontakt-Rasselgeräuschen kommt, wenn der Metallschlauch kurzfristig die Innenfläche des Wellenbalges berührt bzw. auf die Innenfläche des Wellenbalges prallt. Hierbei können zusätzlich an der Innenfläche des Wellenbalges durch die "Polygonecken" erzeugte Reibkerben entstehen, die Ausgangsort für Dauerbrüche des Wellenbalges sind oder sein können.

Im Ergebnis sind die im Stand der Technik bekannten Flexschläuche nicht optimal ausgebildet, da einerseits die Wellenbalg-Resonanzschwingungen nicht optimal gedämpft werden, andererseits es zu Kontakt-Rasselgeräuschen kommt, insbesondere weil Bereiche des Metallschlauches über die als Drahtgestrick ausgeführten Isolierlagen auf die Innenfläche des Wellenbalges einwirken bzw. kurzfristig hier mit der Innenfläche des Wellenbalges in Kontakt kommen. Zusätzlich ist die Montage eines derartig bekannten Flexschlauches nicht unproblematisch, da einerseits die einzelnen Bestandteile entsprechend angeordnet, andererseits diese entsprechend über Endstücke "zusammengefasst" bzw. gehalten werden müssen, so dass die Herstellung der bekannten Flexschläuche auch äußerst kostenintensiv ist.

Günstiger verhält sich die Konstruktion nach der gattungsbildenden FR-A-2310071. Sie weist ein innen- und ein Außenrohr auf, die beide spiralförmig gewellt sind und mit einander zugekehrten Oberflächenbereichen dauernd aufeinander liegen. Bei ungleichen Anzahlen der Wellen besteht die Gefahr, dass Wellentäler des Außenrohres in - wenn auch schmale - Zwischenräume von Gliedern des Innenrohres eingreifen können, wodurch die Flexibiliät dieses Flexschlauches leiden kann.

Der Erfindung liegt die Aufgabe zugrunde, einen gattungsgemäßen Flexschlauch derart auszugestalten und weiterzubilden, dass die Dämpfung der Wellenbalg-Resonanschwingungen optimiert, die Kontakt-Rasselgeräusche vermieden und die Kosten zur Herstellung des Flexschlauches verringert sind. Hierzu muss vermieden werden, dass Wellentäler eines der beiden Rohre in Zwischenräume zwischen Gliedern des jeweils anderen Rohres eindringen können.

Die Erfindung wird durch die Merkmale des Anspruchs definiert.

Die zuvor aufgezeigte Aufgabe ist nun dadurch gelöst, dass der Metallschlauch derart ausgebildet und innerhalb des Wellenbalges angeordnet ist, dass - in axialer Richtung des Wellenbalges gesehen über die gesamte Länge des Wellenbalges ein direkter Kontakt zwischen der äußeren Umfangsfläche des Metallschlauches und der Innenfläche des Wellenbalges gewährleistet ist. Da über die gesamte Länge des Wellenbalges betrachtet ein entsprechender direkter Kontakt zwischen der Umfangsfläche bzw. Außenfläche des Metallschlauches und der Innenfläche des Wellenbalges, hier insbesondere der entsprechenden Fläche der Wellentäler gewährleistet ist, werden die oben beschriebenen Nachteile vermieden. Einerseits entfallen - wie im Stand der Technik bisher üblich - die als Drahtgestrick ausgeführten Isolierlagen zwischen Wellenbalg und Metallschlauch, andererseits werden die Kontakt-Rasselgeräusche ebenfalls vermieden, weil insbesondere ein Aufprall des Metallschlauches auf die Innenfläche des Wellenbalges vermieden ist, da diese nunmehr direkt in Kontakt miteinander stehen. Weiterhin werden die Wellenbalg-Resonanzschwingungen entsprechend gedämpft, was im folgenden noch näher erörtert werden wird. Von besonderem Vorteil ist auch, dass ein derartig erfindungsgemäßer Flexschlauch sehr kostengünstig herstellbar ist, was im folgenden noch deutlich werden wird. Weiterhin ist der Strömungsquerschnitt des Flexschlauches bei gleichbleibendem Außendurchmesser nunmehr vergrößert, da die entsprechenden Isolierlagen als Zwischenlagen entfallen sind. Der so ausgebildete erfindungsgemäße Flexschlauch weist im wesentlichen die gleichen Funktionen wie die im Stand Technik bekannten Flexschläuche auf, wobei hier nunmehr weniger Einzelteile entsprechend montiert werden müssen und hierdurch auch wiederum die Montagekosten verringert worden sind. Im Ergebnis ist der hier beschriebene erfindungsgemäße Flexschlauch optimiert.

Die im Anspruch erwähnten "Spiralelemente" bezeichnen die einzelnen Windungen der der Metallschlauch bildenden Spirale.

Es gibt nun eine Vielzahl von Möglichkeiten, den erfindungsgemäßen Flexschlauch in vorteilhafter Weise auszugestalten und weiterzubilden. Hierfür darf an dieser Stelle auf die dem Patentanspruch 1 nachgeordneten Patentansprüche verwiesen werden. Im übrigen wird nun eine Ausführungsform anhand einer Zeichnung näher beschrieben. In der Zeichnung zeigt
- Fig.: 1 einen erfindungsgemäßen Flexschlauch in einer schematischen Darstellung teilweise geschnitten von der Seite und

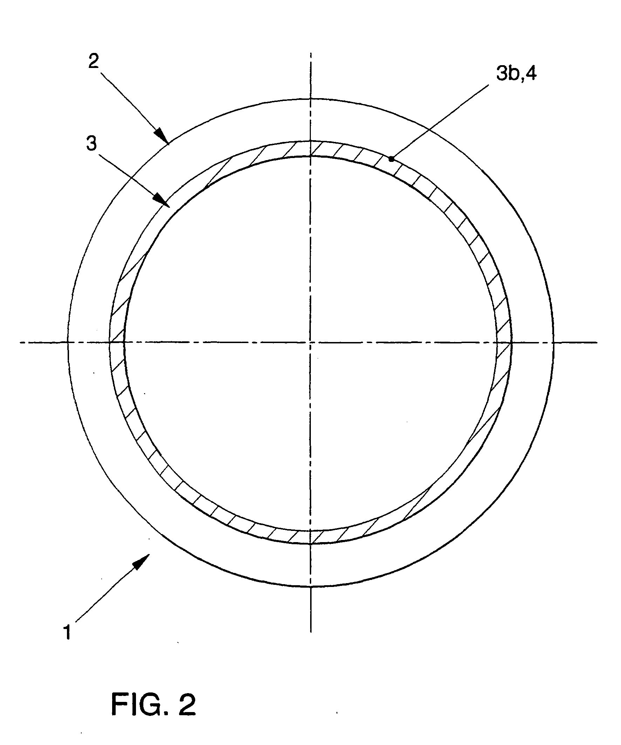

- Fig. 2: einen erfindungsgemäßen Flexschlauch in einer schematischen Darstellung im Schnitt.

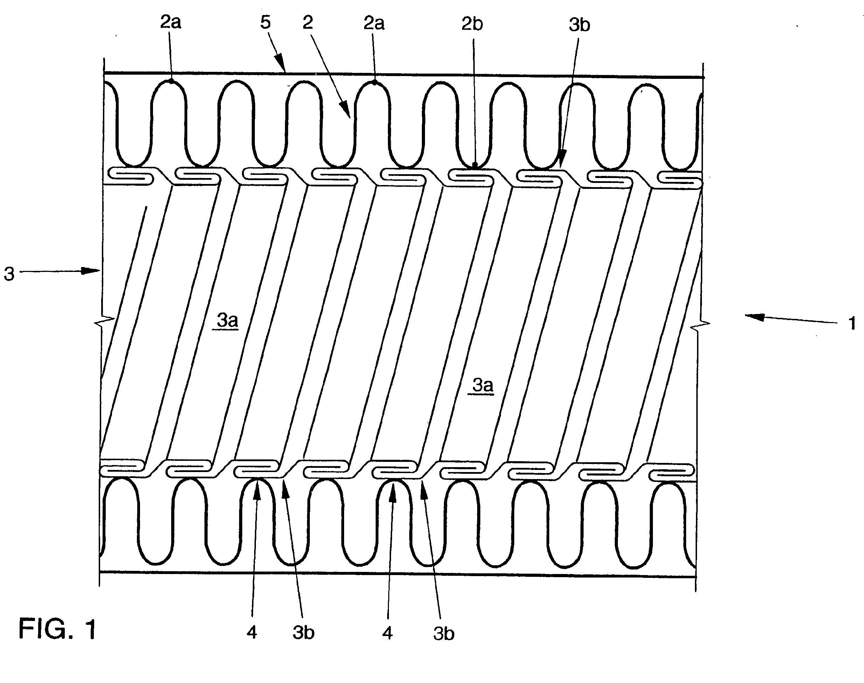

Die Fig.1 und 2 zeigen-zumindest-teilweise- einen Flexschlauch 1 in einer schematischen Darstellung, insbesondere für eine nicht dargestellte Abgasleitung eines Verbrennungsmotors bei einem Kraftfahrzeug. Der Flexschlauch 1 weist einen Wellenbalg 2 und einen innerhalb des Wellenbalges 2 vorgesehenen Metallschlauch 3 auf. Fig. 1 zeigt hier in einer schematischen Darstellung von der Seite den Wellenbalg 2 mit den Wellenbergen 2a und den Wellentalern 2b. Weiterhin ist erkennbar, daß der Metallschlauch 3 aus mehreren Spiralelement 3a sequentiell "zusammengesetzt" ist Die entsprechende Anordnung des Wellenbalges 2 bzw. des Metallschlauches 3 schematisch im Schnitt zeigt die Fig 2.

Die eingangs beschriebenen Nachteile werden nun dadurch vermieden, d.h.die Kontakt-Rasselgeräusche dadurch verringert, die Dämpfung der Wellenbalg-Resonanzschwingung dadurch realisiert bzw die Herstellung des Flexschlauches 1 kostengünstig dadurch optimiert, daß der Metallschlauch 3 derart ausgebildet und innerhalb des Wellenbalges 2 angeordnet ist, daß-in axialer Richtung des Wellenbalges 2 gesehen über die gesamte Lange des Wellenbalges 2 ein direkter Kontakt zwischen der äußeren Umfangsfläche 3b des Metallschlauches 3 und der Innenfläche 4 des Wellenbalges 2 gewährleistet ist. Hierbei entspricht die Innerfläche 4 der entsprechenden nach innen gerichteten Außenfläche der Wellentäler 2b des Wellenbalges 2 Wie insbesondere deutlich aus der Fig 2 zu erkennen ist, ist nunmehr keine separate Isolierlage zwischen Wellenbalg 2 und Metallschlauch 3 mehr erforderlich, so daß die Anzahl der Bestandteile zur Herstellung des erfindungsgemäßen Flexschauches 1 zunächst verringert ist, was eine entsprechende Montage kostengünstig optimiert. Weiterhin ist aus Fig. 1 zu erkennen, daß über die gesamte Länge des Wellenbalges 2 ein im wesentlichen radial verlaufender Linienkontakt zwischen Metallschlauch 3 und Wellenbalg 2 vorgesehen ist. Aufgrund des zwischen Wellenbalg 2 und Metallschlauches 3 realisierten Linienkontaktes ist zusätzlich eine entsprechende Wärmeisolierung des Metallschlauches 3 realisiert.

Der hier in Fig. 1 dargestellte Metallschlauch 3 ist als Agraffschlauch ausgebildet. Die Wellenzahl des Wellenbalges 2 entspricht der Anzahl der Spiralelemente 3a. Wie aus Fig. 1 deutlich zu erkennen ist, weist der Metallschlauch 3 "spiralförmig" verlaufende bzw. entsprechend "schräg angeordnete" Spiralelemente 3a auf. Die Außenfläche bzw. Umfangsfläche 3b eines Elementes 3a des Metallschlauches 3 steht zumindest teilweise mit zwei benachbarten Wellentälern 2b des Wellenbalges 2 in Kontakt.

Bei axialen Bewegungen bzw. Verformungen des Flexschlauches 1 ist aufgrund der lokalen Reibbewegungen zwischen den Wellentälern 2b des Wellenbalges 2 und den Spiralelementen 3a des Metallschlauches 3 eine Dämpfung des Wellenbalges 2, insbesondere eine Dämpfung der Wellenbalg-Resonanzschwingung gewährleistet. Von besonderem Vorteil ist hier, daß der Metallschlauch 3 durch die mögliche Gleitbewegung der einzelnen Spiralelemente 3a gegeneinander zusätzlich gedämpft ist. Eine Dämpfung der Schwingung des Wellenbalges 2 kann insbesondere dadurch erreicht werden, daß aufgrund der kleinen Masse des Wellenbalges 2 dies hier gut realisiert werden kann. Obwohl die gegeneinander gerichtete mögliche Gleitbewegung der einzelnen Elemente 3a gewünscht ist, will man diese zur Erzielung einer guten Entkopplungswirkung aber auch möglichst gering halten.

Ein weiterer Vorteil ergibt sich aus der hier beschriebenen Konstruktion,der Durchmesser des Metallschlauches 3 um den Betrag des bisherigen - im Stand der Technik üblichen - Freiganges zwischen Wellenbalg 2 und Metallschlauch 3, vorzugsweise um ca. 2 mm, zunehmen kann und sich dadurch der Abgas-Stromungsquerschnitt um ca. 10% vergrößert.

Weiterhin ist der Metallschlauch 3 tordierbar. Dies wird ausgenutzt, um den Außendurchmesser des Metallschlauches 3 zu verändern. Ähnlich wie bei einer Spiralfeder verkleinert sich der Außendurchmesser des Metallschlauches 3 beim Tordieren in Wickelrichtung, wobei er sich bei der Tordierung in umgekehrter Richtung vergrößert. Diese Eigenschaft wird ausgenutzt, um den Metallschlauch 3 spielfrei in den Wellenbalg 2 einzubauen. Anders ausgedrückt: Aufgrund der Todierbarkeit des Metallschlauches 3 ist eine spielfreier Einbau in den Wellenbalg 2 ermöglicht. Bei der Herstellung des Metallschlauches 3 wird vorzugsweise der Außendurchmesser des Metallschlauches 3 gleich dem Innendurchmesser des Wellenbalges 2 gewählt, damit sichergestellt wird, daß im eingebauten Zustand des Metallschlauches 3 auch die entsprechenden Auslegungsgrößen, wie bspw. die axiale Reibkraft und/oder die normierte axiale Verlustarbeit erreicht werden kann. Bei der Tordierung des Metallschlauches 3 kann in Extremzuständen ("Zugedreht-Aufgedreht") eine Durchmesseränderung (bei einem Nenndurchmesser von vzw. 45 mm) von bis zu 2,5 mm eintreten, wobei sich unter Ausnutzung dieser Eigenschaft der Metallschlauch 3 ausreichend, d. h. der Außendurchmesser des Metallschlauches 3 ausreichend verkleinern läßt, um problemlos in des Wellenbalg 2 eingeführt zu werden. Nach der Einbringung des Metallschlauches 3 in den Wellenbalg 2 kann dieser wieder so weit aufgedrillt werden, bis er innen am Wellenbalg 2 zur Anlage kommt. Bei den Vorgängen "Zudrehen" wie "Aufdrehen", d. h. bei der Tordierung des Metallschlauches 3 ist sicherzustellen, daß der Metallschlauch 3 beim Zudrehen nicht überbeansprucht wird und daß beim Aufdrehen der spielfreie Einbau in den Wellenbalg 2 ohne eine unerwünscht hohe Verspannung erfolgt.

Weiterhin weist, wie Fig. 1 zeigt, der Wellenbalg 2 eine Außenumflechtung 5 auf. Die Außenumflechtung 5 ist hier als Kreuzgeflecht ausgeführt. Der Wellenbalg 2 ist selbst aus Metall gefertigt. Es ist auch denkbar, daß der Wellenbalg 2 zweigliedrig ausgebildet ist, d. h. einen ersten Teilbereich mit entsprechenden Wellenbergen 2a und Wellentälern 2b und einen zweiten Teilbereich mit entsprechenden Wellenbergen 2a und Wellentälern 2b aufweist, wobei diese beiden Teilbereiche durch einen "glatten Zwischenabschnitt" miteinander verbunden sind.

Fig. 2 zeigt, daß der Metallschlauch 3 einen im wesentlichen kreisförmigen Querschnitt aufweist, wobei hierdurch der entsprechende im wesentlichen radiale Linienkontakt zwischen Metallschlauch 3 und Wellenbalg 2 gewährleistet ist. Bei der hier gezeigten Ausführungsform sind über die Länge des Wellenbalges 2 entsprechend den Spiralelementen 3a "schräg verlaufende" radiale Linienkontakte realisiert. Zwar sind auch andere Ausführungsformen denkbar, diese hat sich aber als besonders vorteilhaft erwiesen.

Bisher war im Stand der Technik üblich, daß der Wellenbalg 2 entsprechend zylindrische Anschlußenden aufweist, die auf spezifische Art und Weise ausgebildet sein müssen, um alle Bestandteile zu "fassen". Auch die Ausbildung dieser zylindrischen Anschlußenden ist nunmehr wesentlich vereinfacht, da eben nunmehr nicht mehr so viele einzelne Bestandteile "gefaßt" werden müssen

Durch die erfindungsgemäße Konstruktion des Flexschlauches 1 ist nicht nur die Dämpfung der Resonanzschwingungen des Flexschlauches 1, insbesondere des Wellenbalges 2 gewährleistet, sondern die Herstellung vereinfacht sowie deren Kosten minimiert, wobei die Kontakt-Rasselgeräusche im wesentlichen eliminiert sind.

## Patentansprüche

1. Flexschlauch (1), insbesondere für eine Abgasleitung eines Verbrennungsmotors bei einem Kraftfahrzeug, mit einem spiralförmigen Wellenbalg (2) und einem innerhalb des Wellenbalgs (2) vorgesehen spiralförmigen Metallschlauch (3) mit in axialer Richtung aufeinander folgenden miteinander verbundenen Spiralelementen , (3a), deren Außenflächen (3b), über die gesamte Länge des Wellenbalgs (2) in direktem Kontakt mit Wellentälern (2b) des Wellenbalgs (2) stehen, **dadurch gekennzeichnet, dass** die Wellenzahl in axialer Richtung des Wellenbalgs (2) der Zahl der Spiralelemente (3a) des Metallschlauchs (3) entspricht, die spiralförmig bzw. schräg derart verlaufen, dass ihre Außenflächen (3b) jeweils in axialer Richtung benachbarten Wellentälern (2b) des Wellenbalgs (2) umlaufend berührend gegenüberstehen

2. Flexschlauch nach Anspruch 1, **dadurch gekennzeichnet, dass** im wesentlichen über die gesamte Länge des Wellenbalges (2) mehrere im wesentlichen radial verlaufende Linienkontakte zwischen Metallschlauch (3) und Wellenbalg (2) vorgesehen sind.

3. Flexschlauch nach Anspruch 1 oder 2, **dadurch gekennzeichnet, dass** aufgrund der zwischen Wellenbalg (2) und Metallschlauch (3) realisierten Linienkontakte eine entsprechende Wärmeisolierung des Metallschlauches (3) realisiert ist.

4. Flexschlauch nach einem der vorstehenden Ansprüche, **dadurch gekennzeichnet, dass** der Metallschlauch (3) als Agraffschlauch ausgebildet ist.

5. Flexschlauch nach einem der vorstehenden Ansprüche, **dadurch** gekennzeichet, dass bei axialen Bewegungen bzW. Verformungen des Flexschlauches (1) aufgrund der lokalen Reibbewegungen zwischen den Wellentälern (2b) des Wellenbalges (2) und den Spiralelementen (3a) des Metallschlauches (3) eine Dämpfung des Wellenbalges (2) gewährleistet ist.

6. Flexschlauch nach einem der vorstehenden Ansprüche, **dadurch gekennzeichnet, dass** der Metallschlauch (3) durch die mögliche Gleitbewegung der einzelnen Elemente (3a) gegeneinander zusätzlich gedämpft ist.

7. Flexschlauch nach einem der vorstehenden Ansprüche, **dadurch gekennzeichnet, dass** der Metallschlauch (3) tordierbar ist.

8. Flexschlauch nach einem der vorstehenden Ansprüche, **dadurch gekennzeichnet, dass** aufgrund der Tordierbarkeit des Metallschlauches (3) ein spielfreier Einbau in den Wellenbalg (2) ermöglicht ist.

9. Flexschlauch nach einem der vorstehenden Ansprüche, **dadurch gekennzeichnet, dass** der Wellenbalg (2) eine Außenumflechtung (5) aufweist.

10. Flexschlauch nach einem der vorstehenden Ansprüche, **dadurch gekennzeichnet, dass** die Außenumflechtung (5) als Drahtgeflecht oder Drahtgestrick ausgeführt ist.

11. Flexschlauch nach einem der vorstehenden Ansprüche, **dadurch gekennzeichnet, dass** der Wellenbalg (2) aus Metall gefertigt ist.

12. Flexschlauch nach einem der vorstehenden Ansprüche, **dadurch gekennzeichnet, dass** der Wellenbalg (2) zweigliedrig ausgebildet ist.

13. Flexschlauch nach einem der vorstehenden Ansprüche, **dadurch gekennzeichnet, dass** der Metallschlauch (3) einen im wesentlichen kreisförmigen Querschnitt aufweist.

14. Flexschlauch nach einem der vorstehenden Ansprüche, **dadurch gekennzeichnet, dass** der Wellenbalg (2) zylindrische Anschlußenden aufweist.

15. Flexschlauch nach einem der vorstehenden Ansprüche, **dadurch gekennzeichnet, dass** eine Dämpfung der Schwingungen des Wellenbalges (2) aufgrund der durch die mit dem Metallschlauch (3) bestehenden Kontaktflächen durch entsprechende Reibung gewährleistet ist.

## Claims

1. Flexible hose (1), in particular for an exhaust pipe of an internal combustion engine in a motor vehicle, comprising a spiral corrugated bellows (2) and a spiral metal tube (3), provided inside the corrugated bellows (2) and having interconnected spiral elements (3a) following one another in the axial direction, the outer surfaces (3b) of which are in direct contact with corrugation troughs (2b) of the corrugated bellows (2) over the entire length of the corrugated bellows (2), **characterized in that** the number of corrugations in the axial direction of the corrugated bellows (2) corresponds to the number of spiral elements (3a) of the metal tube (3), which run spirally or obliquely in such a way that their outer surfaces (3b) are respectively opposite, and peripherally in contact with, neighbouring corrugation troughs (2b) in the axial direction of the corrugated bellows (2).

2. Flexible hose according to Claim 1, **characterized in that** a number of substantially radially running linear contacts between the metal tube (3) and the corrugated bellows (2) are provided substantially over the entire length of the corrugated bellows (2).

3. Flexible hose according to Claim 1 or 2, **characterized in that**, on account of the linear contact realized between the corrugated bellows (2) and the metal tube (3), a corresponding thermal insulation of the metal tube (3) is realized.

4. Flexible hose according to one of the preceding claims, **characterized in that** the metal tube (3) is formed as a strip wound hose.

5. Flexible hose according to one of the preceding claims, **characterized in that**, in the event of axial movements or deformations of the flexible hose (1), damping of the corrugated bellows (2) is ensured on account of the local frictional movements between the corrugation troughs (2b) of the corrugated bellows (2) and the spiral elements (3a) of the metal tube (3).

6. Flexible hose according to one of the preceding claims, **characterized in that** the metal tube (3) is additionally damped by the possible sliding movement of the individual elements (3a) with respect to one another.

7. Flexible hose according to one of the preceding claims, **characterized in that** the metal tube (3) can be twisted.

8. Flexible hose according to one of the preceding claims, **characterized in that** the twistability of the metal tube (3) allows it to be fitted in the corrugated bellows (2) without any play.

9. Flexible hose according to one of the preceding claims, **characterized in that** the corrugated bellows (2) has an outer braiding (5).

10. Flexible hose according to one of the preceding claims, **characterized in that** the outer braiding (5) is configured as a woven or knitted wire fabric.

11. Flexible hose according to one of the preceding claims, **characterized in that** the corrugated bellows (2) is produced from metal.

12. Flexible hose according to one of the preceding claims, **characterized in that** the corrugated bellows (2) is formed as two elements.

13. Flexible hose according to one of the preceding claims, **characterized in that** the metal tube (3) has a substantially circular cross section.

14. Flexible hose according to one of the preceding claims, **characterized in that** the corrugated bellows (2) has cylindrical connecting ends.

15. Flexible hose according to one of the preceding claims, **characterized in that**, on account of the contact surfaces existing with the metal tube (3), damping of the vibrations of the corrugated bellows (2) is ensured by corresponding friction.

## Revendications

1. Tuyau souple flexible (1), en particulier pour un tuyau de gaz d'échappement d'un moteur à combustion interne dans un véhicule automobile, comprenant un soufflet ondulé en forme de spirale (2) et un tuyau souple métallique (3) en forme de spirale prévu à l'intérieur du soufflet ondulé (2), avec des éléments en spirale (3a) connectés les uns aux autres et se suivant dans la direction axiale, dont les faces extérieures (3b) sont en contact direct avec les creux des ondulations (2b) du soufflet ondulé (2) sur toute la longueur du soufflet ondulé (2), **caractérisé en ce que**, le nombre des ondulations dans la direction axiale du soufflet ondulé (2) correspond au nombre des éléments en spirale (3a) du tuyau souple métallique (3), qui s'étendent en spirale ou obliquement de telle sorte que leurs faces extérieures (3b) soient à chaque fois en regard en contact périphérique dans la direction axiale avec des creux d'ondulations adjacents (2b) du soufflet ondulé (2).

2. Tuyau souple flexible selon la revendication 1, **caractérisé en ce que** plusieurs contacts linéaires s'étendant essentiellement radialement entre le tuyau souple métallique (3) et le soufflet ondulé (2) sont prévus essentiellement sur toute la longueur du soufflet ondulé (2).

3. Tuyau souple flexible selon la revendication 1 ou 2, **caractérisé en ce qu'**en raison des contacts linéaires réalisés entre le soufflet ondulé (2) et le tuyau souple métallique (3), une isolation thermique correspondante du tuyau souple métallique (3) est obtenue.

4. Tuyau souple flexible selon l'une quelconque des revendications précédentes, **caractérisé en ce que** le tuyau souple métallique (3) est réalisé sous forme de tuyau souple agrafé.

5. Tuyau souple flexible selon l'une quelconque des revendications précédentes, **caractérisé en ce que** dans le cas de mouvements axiaux ou de déformations axiales du tuyau souple flexible (1) du fait des mouvements de frottement locaux entre les creux des ondulations (2b) du soufflet ondulé (2) et les éléments en spirale (3a) du tuyau flexible métallique (3), un amortissement du soufflet ondulé (2) est garanti.

6. Tuyau souple flexible selon l'une quelconque des revendications précédentes, **caractérisé en ce que** le tuyau souple métallique (3) est amorti en outre par le mouvement de glissement possible des éléments individuels (3a) les uns contre les autres.

7. Tuyau souple flexible selon l'une quelconque des revendications précédentes, **caractérisé en ce que** le tuyau souple métallique (3) peut être tordu.

8. Tuyau souple flexible selon l'une quelconque des revendications précédentes, **caractérisé en ce que** du fait de la capacité de torsion du tuyau souple métallique (3), une incorporation sans jeu dans le soufflet ondulé (2) est possible.

9. Tuyau souple flexible selon l'une quelconque des revendications précédentes, **caractérisé en ce que** le soufflet ondulé (2) présente un tressage périphérique extérieur (5).

10. Tuyau souple flexible selon l'une quelconque des revendications précédentes, **caractérisé en ce que** le tressage périphérique extérieur (5) est réalisé sous forme de tressage de fil métallique ou de maillage de fil métallique.

11. Tuyau souple flexible selon l'une quelconque des revendications précédentes, **caractérisé en ce que** le soufflet ondulé (2) est fabriqué en métal.

12. Tuyau souple flexible selon l'une quelconque des revendications précédentes, **caractérisé en ce que** le soufflet ondulé (2) est réalisé en deux parties.

13. Tuyau souple flexible selon l'une quelconque des revendications précédentes, **caractérisé en ce que** le tuyau souple métallique (3) présente une section transversale essentiellement circulaire.

14. Tuyau souple flexible selon l'une quelconque des revendications précédentes, **caractérisé en ce que** le soufflet ondulé (2) présente des extrémités de raccordement cylindriques.

15. Tuyau souple flexible selon l'une quelconque des revendications précédentes, **caractérisé en ce qu'**un amortissement des vibrations du soufflet ondulé (2) est assuré en raison des faces de contact existant avec le tuyau souple métallique (3), par un frottement correspondant.
